# EUROPEAN PATENT SPECIFICATION

(11) **EP 1 614 939 B1**
(45) Date of publication and mention of the grant of the patent: **23.07.2008**
(21) Application number: 05014841.0
(22) Date of filing: 08.07.2005
(51) Int. Cl.: F16H 61/662

(54) **Power unit**
Antriebseinheit
Groupe moteur

(30) Priority: 08.07.2004 JP 2004202372; 08.07.2004 JP 2004202371; 07.06.2005 JP 2005167158
(43) Date of publication of application: 11.01.2006
(73) Proprietor: Yamaha Hatsudoki Kabushiki Kaisha, Iwata-shi, Shizuoka-ken (JP)
(72) Inventor: Sugitani, Tsuyoshi, Shizuoka-ken (JP); Takebe, Mitsukazu, Shizuoka-ken (JP); Fujii, Isao, Shizuoka-ken (JP); Hayashi, Junji, Shizuoka-ken (JP)
(74) Representative: Grünecker, Kinkeldey, Stockmair & Schwanhäusser Anwaltssozietät

(56) References cited:
- EP-A- 0 558 752
- EP-A- 1 420 195
- DE-A1- 19 946 193

## Description

The present invention relates to a power unit, in particular small-sized, vehicles comprising an engine having a crank case and V-belt-type non-stage transmission having a groove with regulating mechanism with an electric motor for controlling a change gear ratio by changing a groove width.

A power unit formed by combining a V-belt type non-stage transmission with an engine has been spread as a power unit for a small-sized vehicle, such as a scooter type motorcycle and the like.

This V-belt type non-stage transmission is formed by passing a V-belt around a pair of sheaves, i.e. a groove-width variable primary sheave and a groove-width variable secondary sheave, which are mounted on a primary shaft into which a driving force of the engine is inputted and a secondary shaft adapted to take out this driving force transmitted to a driving wheel, regulating the diameter of the winding of the V-belt around the sheaves by changing the width of the sheaves by a groove width regulating mechanism, and thereby regulating a change gear ratio between the two sheaves in a non-stepped manner.

Each of the primary sheave and secondary sheave is usually made of a fixed sheave and a movable sheave which form a V-shaped groove therebetween, and each movable sheave is mounted on the primary shaft or secondary shaft so that the movable sheave can be moved in the axial direction of the primary shaft or secondary shaft. The change gear ratio can be regulated in a non-stepped manner by moving the movable sheave by the groove width regulating mechanism.

A structure in which a centrifugal governor mounted on a movable sheave of a primary sheave was generally used (for example, refer to JP-B-63-33588) as a groove width regulating mechanism for a related art V-belt type non-stage transmission of this kind.

The centrifugal governor is formed so that the centrifugal governor is provided with a weight which is fixed to a movable sheave of a primary sheave, and which is moved radially outward by a centrifugal force, and a ramp plate adapted to convert a movement of the weight into an axial thrust. The centrifugal governor is adapted to control a tensile force of the V-belt by applying to the movable sheave a thrust in accordance with a rotational frequency of the engine and a wedge angle of the ramp plate, and control a change gear ratio by balancing the tensile force of the V-belt with the thrust of a spring working axially on the movable sheave of the secondary sheave.

It has become necessary that a gear change ratio of a vehicle used in recent years be changed automatically to a proper level in accordance with the traveling condition and operating condition of the vehicle so as to improve the traveling stability and energy saving efficiency.

However, in the related art centrifugal controlling of a change gear ratio done by a centrifugal governor, the change gear ratio is determined by only the rotational frequency of the movable sheave to which the governor is fixed, and it was difficult to carry out a flexible change gear ratio control operation, for example, an operation for varying a change gear ratio in accordance with an operating condition including the acceleration and deceleration, etc. of the vehicle.

In order to solve such a problem, a groove regulating mechanism for controlling a change gear ratio to a desired level by changing the groove width of the primary sheave and secondary sheave by an electric motor without using a centrifugal governor has been proposed. A power unit for small-sized vehicles containing an electric motor of a groove width regulating mechanism in an inner portion of a casing for the power unit housing a primary sheave and a secondary sheave with a primary shaft and a secondary shaft has also been proposed (for example, refer to Japanese Patent Registration No. 2967374).

In the related art power unit having an electric motor for the groove width regulating mechanism in an inner portion of a casing of the power unit, and the electric motor is exposed to the heat in the power unit, the heat of the electric motor itself rarely escaping to the outside. Since the surroundings of the electric motor becomes a high-temperature atmosphere, it becomes necessary to cope with the difficulties by heightening the thermal resistance of the electric motor, or covering the circumference of the electric motor with a cooling jacket. This causes the manufacturing cost to increase.

The electric motor is hidden from view in an inner portion of the casing, so that the inspection of and maintenance work for the electric motor cannot be carried out simply.

Moreover, the casing houses a power transmission gear train which is movable, and it is demanded that techniques for arranging electric wires around the electric motor in an excellent manner be thought out so to prevent the electric wires from interfering with these movable parts.

The electric motor has large weight, and has a large influence upon the balance in weight in the longitudinal or lateral direction of the vehicle. When the electric motor is provided in a certain portion of a vehicle, there is the possibility that the imbalance of the weight of the vehicle occurs.

A motorcycle of a structure in which a power unit is joined to a body frame so that the power unit can be vibrated for the purpose of functioning the power unit itself as a frame for suspending a driving wheel therefrom has been spread in recent years. Therefore, when the electric motor is provided in a certain portion of a vehicle, the inertial force generated by the electric motor increases when the power unit is vibrated. In order to resist the inertial force, it is necessary to reinforce a joint portion between the power unit and body frame, and a casing of the power unit. This causes an increase in the weight of the vehicle in some cases.

The closest prior document EP 1 420 195 A2 teaches a continuously variable ratio drive of the type with expandable conical pulleys for internal combustion engines. Said ratio drive is controllable by an electric motor driven and controlled by an electronic unit suitable for changing the transmission ratio. Said electric motor is attached to the outside of a casing, which houses the continuously variable ratio drive.

A further prior art document EP 0 558 752 A1 teaches a non-stage transmission for a vehicle having an engine. Said engine is connected with the transmission having a gear change ratio changing means operated by an electric motor. Said motor is directly attached to said means and is housed together therewith in a transmission case. The engine and the transmission are attached to a vehicle frame by a pivot, such that the engine and the transmission are swingably supported on the frame. The pivot axis is arranged parallel with regard to the axis of the pulley of the transmission, while the central axis of the electric motor is arranged perpendicular to the axis of the pulley, such that said electric motor extends in longitudinal direction of the vehicle and can be easily housed within the transmission case.

It is an objective of the present invention to provide a power unit for, in particular small-sized, vehicles comprising an engine having a crank case and a V-belt type non-stage transmission having a groove-width regulating mechanism, wherein said unit can be manufactured at low costs with a single structure and high operation performance.

According to the subject matter of the present invention, said objective is solved by a power unit for, in particular small-sized, vehicles comprising an engine having a crank case and a V-belt type non-stage transmission having the features of independent claim 1. Preferred embodiments are laid down in the dependent claims.

Accordingly, it is provided a power unit as indicated above capable of not only controlling a change gear ratio in accordance with the operating condition and traveling condition of a vehicle but also reducing the manufacturing cost by holding down the heat resisting performance needed by the electric motor of a groove width regulating mechanism, and capable of reducing the weight of the power unit and vehicle.

According to a preferred embodiment, the electric motor of the groove width regulating mechanism is provided on an outer circumferential surface of the upper portion or the lower portion of the crank case of the engine.

Preferably, a pivotal support is provided on the outer surface of the crank case being pivotally joined to a body frame of the vehicle, wherein the electric motor is provided in a vicinity of the pivotal support.

Further, preferably a starter motor for starting the engine is provided, said starter motor and said electric motor being provided in a vicinity of the positions on the front and rear sides of the pivotal support.

According to a further preferred embodiment, the power unit is provided with a transmission casing extending rearward from the crank case of the engine, and a V-belt type non-stage transmission housed in the transmission casing and adapted to transmit a driving force of the engine to a driving wheel, wherein the pivotal support provided on the outer surface of the crank case is pivotably joined to the body frame, wherein the V-belt type non-stage transmission includes: a primary sheave which is mounted on a primary shaft into which the driving force of the engine is inputted, and which is provided with a belt winding V-groove, a secondary sheave which is mounted on a secondary shaft from which the driving force to be transmitted to the driving wheel is taken out, and which is provided with a belt winding V-groove, a V-belt passed around the V-grooves of these primary sheave and secondary sheave and adapted to transmit the rotational driving force between the two sheaves, and wherein the mechanism for regulating the width of the grooves of the primary sheave and secondary sheave applies an arbitrary moving thrust to a movable sheave of the primary sheave by the electric motor.

Therein, preferably the electric motor of the groove width regulating mechanism and the starter motor used to start the engine are provided in the vicinity of positions on the front and rear sides of the pivotal support on the outer surface of the crank case.

According to another preferred embodiment, the power unit is provided with a balancer shaft for offsetting the vibration of the engine being provided in the vicinity of the portion of the pivotal support which is on an inner side of the crank case.

According to yet another preferred embodiment, the electric motor of the groove width regulating mechanism is provided on the portion of an outer surface of an upper portion of the crank case which is behind the pivotal support.

According to still another embodiment, there is provided a vehicle, in particular motorcycle, having a power unit as indicated above.

In the following, the present invention is explained in greater detail with respect to several embodiments thereof in conjunction with the accompanying drawings, wherein:
- Fig. 1: is a side view of a scooter type motorcycle mounted with a power unit for small-sized vehicles in the first embodiment;
- Fig. 2: is a side view of the power unit joined pivotably to the body frame of the motorcycle shown in Fig. 1;
- Fig. 3: is a drawing (plan view) taken in the direction of an arrow A in Fig. 2;
- Fig. 4: is an enlarged view of the power unit shown in Fig. 2;
- Fig. 5: is a side view showing the arrangement of the sheaves in the V-belt type nonstage transmission provided in the power unit shown in Fig. 4;
- Fig. 6: is a sectional view taken along the line B-B in Fig. 5;
- Fig. 7: is a sectional view taken along the line C-C in Fig. 5;
- Fig. 8: is an enlarged view of the surroundings of the electric motor shown in Fig. 3; and
- Fig. 9: is an enlarged view of a principal portion of the power unit in the second embodiment.

Preferred embodiments of the power unit will now be described in detail with reference to the drawings.

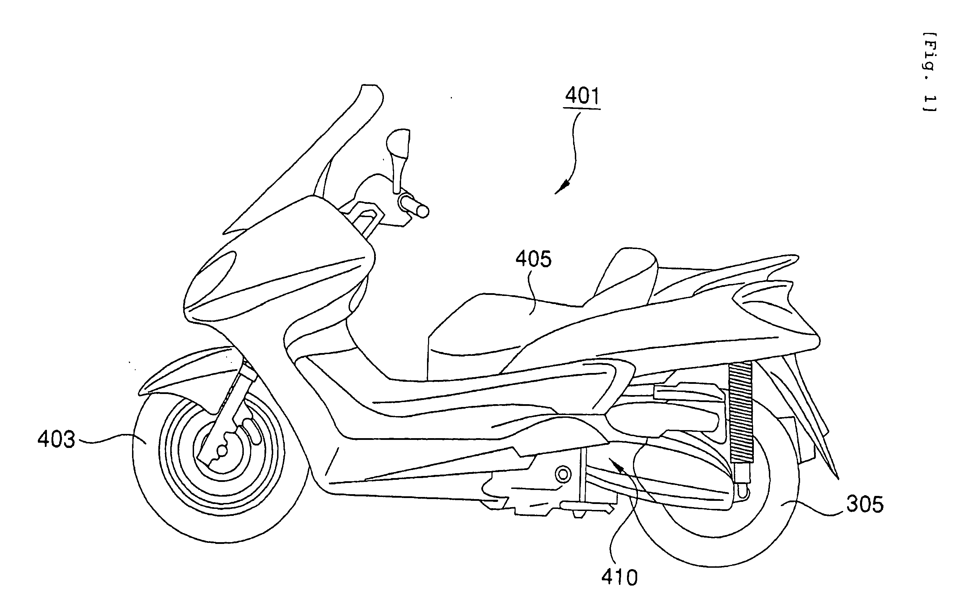

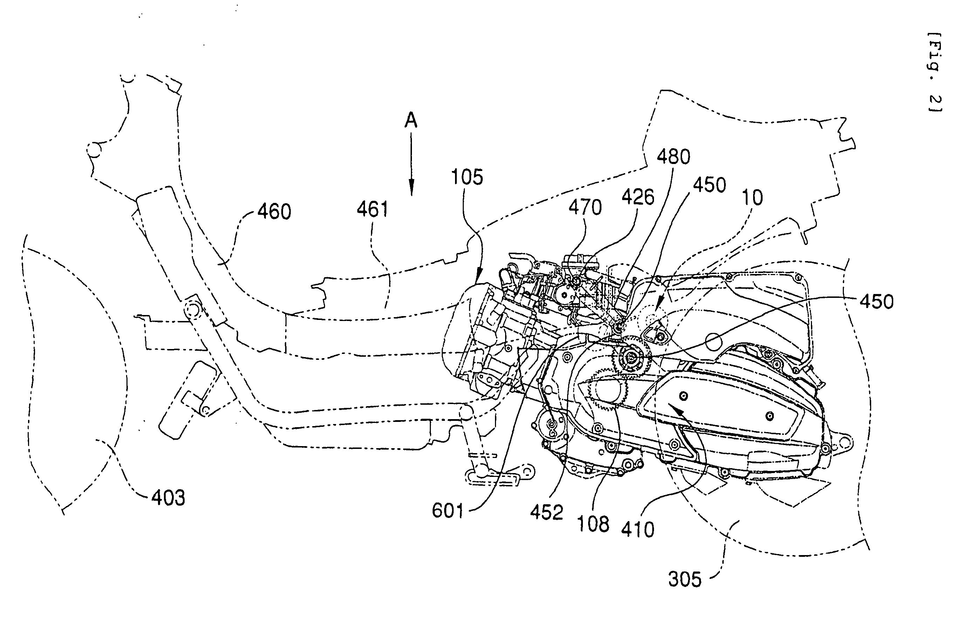

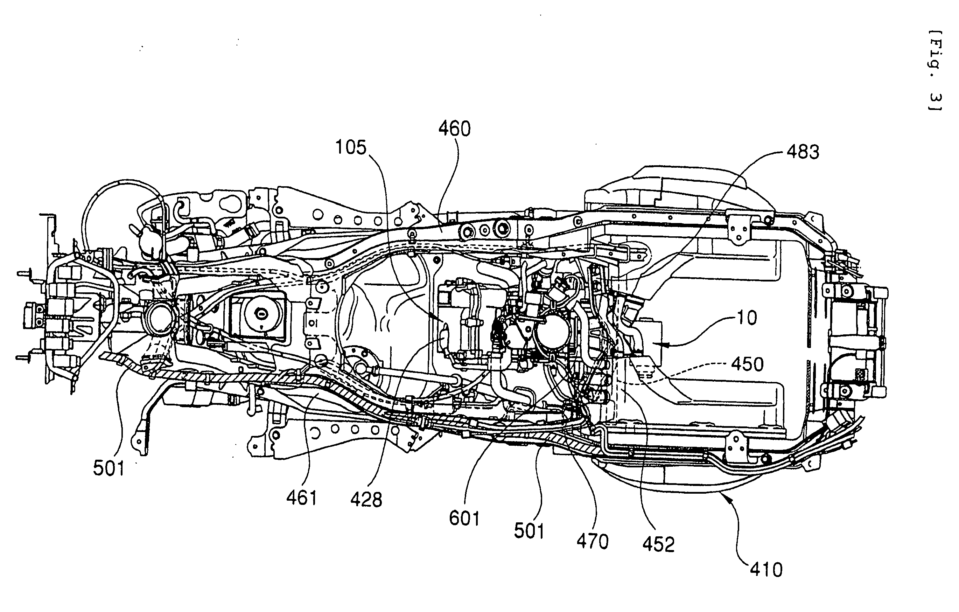

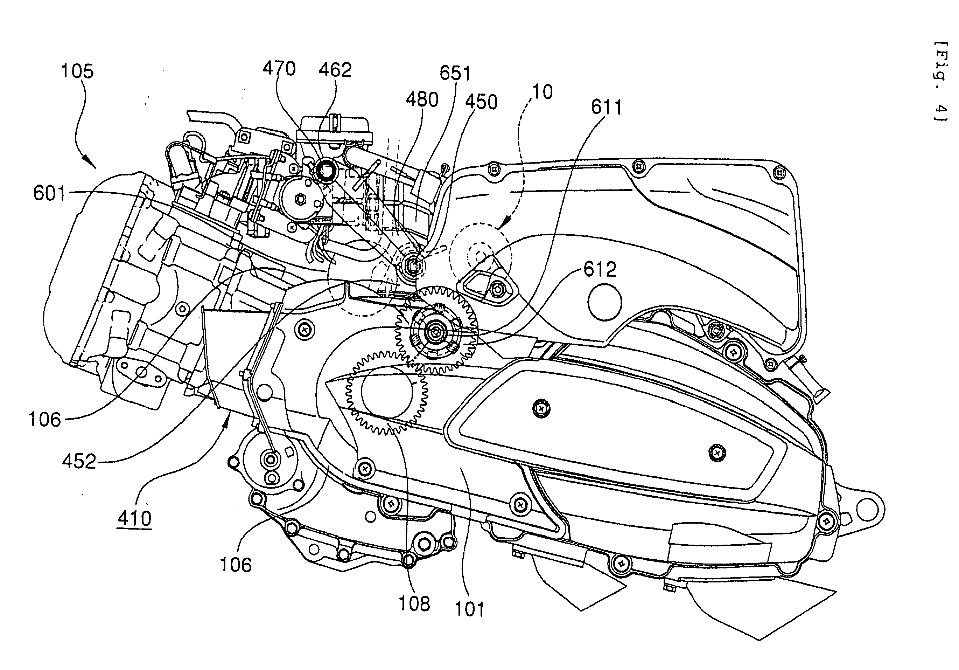

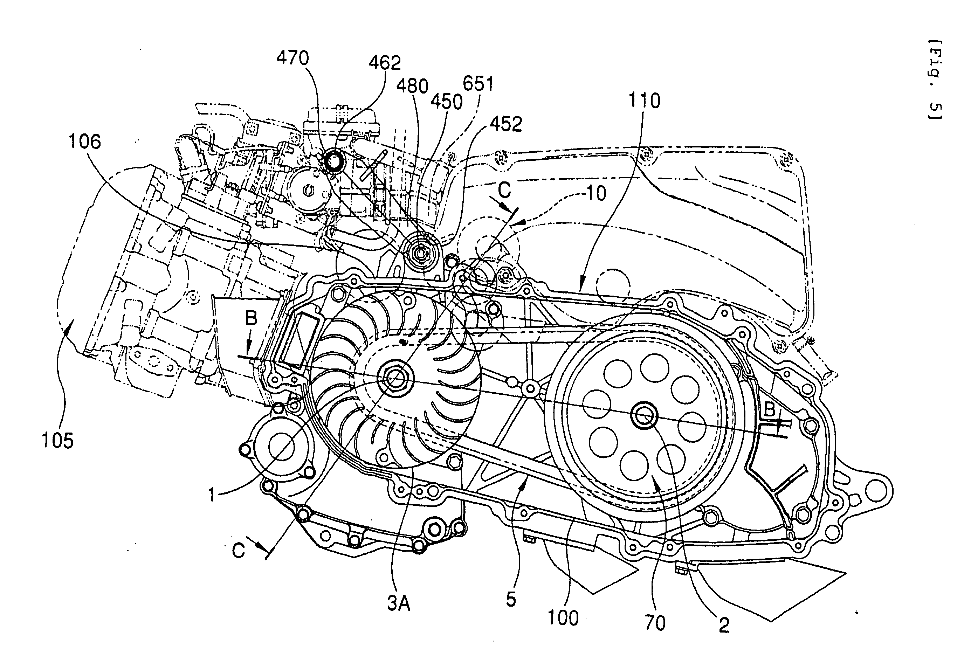

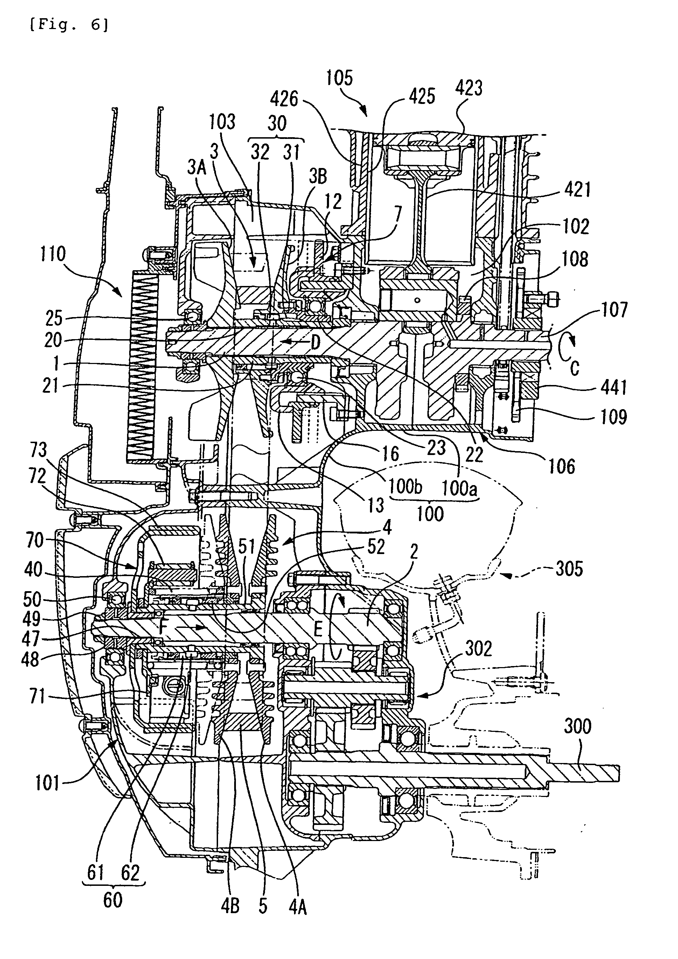

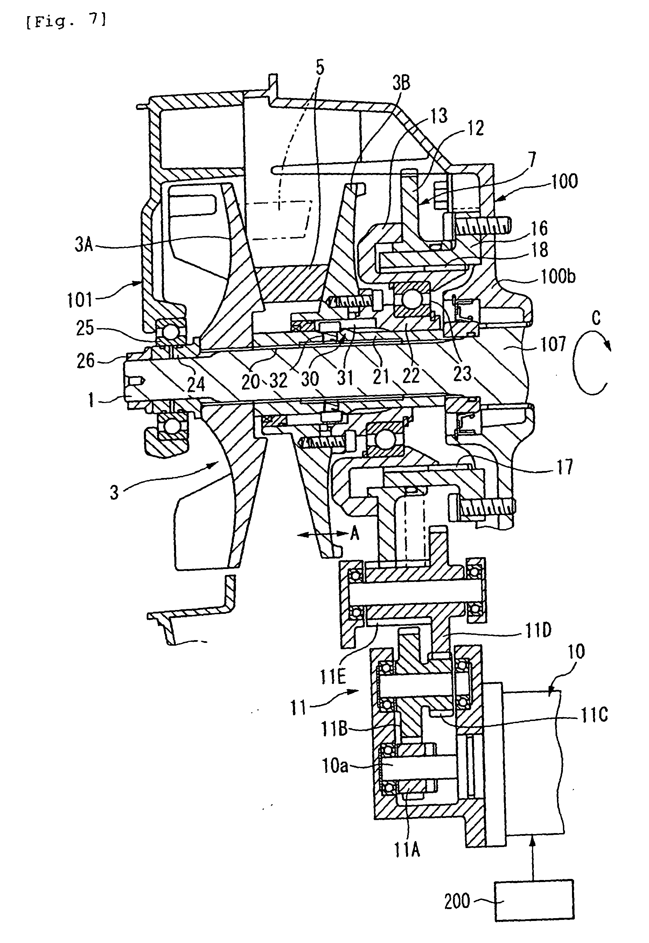

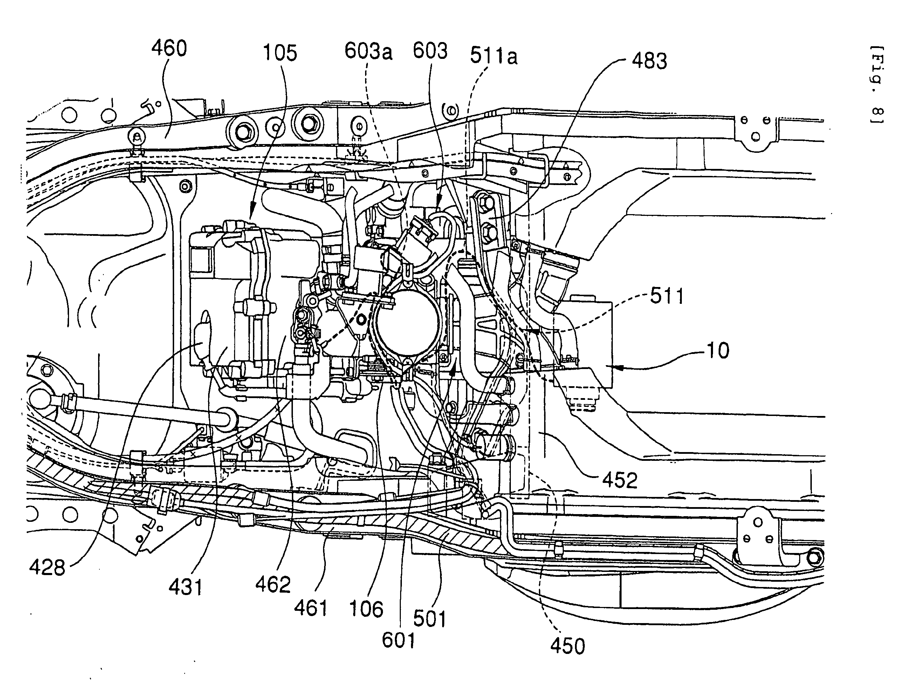

Fig. 1 is a side view of a scooter type motorcycle mounted with the power unit in a first embodiment, Fig. 2 a side view of the power unit joined pivotably to a body frame shown in Fig. 1, Fig. 3 a drawing (plan view) taken along an arrow A in Fig. 2, Fig. 4 an enlarged view of the power unit shown in Fig. 2, Fig. 5 a side view showing the arrangement of sheaves of the V-belt type non-stage transmission provided on the power unit shown in Fig. 4, Fig. 6 a sectional view taken along the line B-B in Fig. 5, Fig. 7 a sectional view taken along the line C-C in Fig. 5, and Fig. 8 an enlarged view of the surroundings of the electric motor shown in Fig. 3.

A motorcycle 401 shown in Fig. 1 is provided with a power unit 410 positioned in the portion thereof which is between a front wheel 403 and a rear wheel 305 constituting a driving wheel, and which is below a seat 405. The greater part of a front surface and both side surfaces of the vehicle are covered with cowls.

The power unit 410 shown in these drawings is provided as shown in Figs. 4 to 6 with an engine 105, transmission casings 100, 101 extending rearward from a crankcase 106 of the engine 105, and a V-belt type non-stage transmission 110 housed in a space (belt chamber 103) defined by these transmission casings 100, 101 and crankcase 106 and adapted to change an output speed from the engine 105. The output from this non-stage transmission 110 is transmitted to an axle 300 of the rear wheel 305 provided at a rear side of the engine 105 and constituting a driving wheel via an automatic centrifugal clutch 70 and a speed reducer 302 made of a gear train.

The power unit 410 in this embodiment defines as shown in Fig. 6 a crank chamber 102 by a right portion 100a of the transmission casing 100 and crankcase 106, and the belt chamber 103 by a left portion 100b of the transmission casing 100 and transmission casing 101. The belt chamber 103 houses therein the V-belt type non-stage transmission 110.

The transmission casing and crankcase may be formed independently of each other, and the crank chamber may then be defined by the crankcase alone and the belt chamber may be defined by the transmission casing alone.

The engine 105 is provided with the right portion 100a of the transmission casing 100 constituting a casing rotatably supporting a crankshaft 107, and crankcase 106; a piston 423 joined to the crankshaft 107 via a connecting rod 421; a cylinder block 426 providing a cylinder portion (combustion chamber) 425 which is engaged with an upper portion of the crankcase 106, and which houses the piston 423 slidingly contacting an inner surface of the cylinder portion 425; and a cylinder head 431 provided with suction exhaust ports and an ignition plug 428 in each cylinder portion 425 and engaged with an upper portion of the cylinder block 426.

In the engine 105 in this embodiment, the crankshaft 107 is provided with its axis extended in the widthwise direction of the vehicle body.

The crankshaft 107 is mounted at a right end thereof with a flywheel 441, on which a generator is provided. This generator is adapted to generate electricity by the rotation of the crankshaft 107 to feed a current to electric parts mounted on the vehicle, and charge batteries mounted on the vehicle with electricity.

The crankshaft 107 is provided at a left end thereof with a primary shaft 1 formed in one body therewith and constituting an input shaft of the V-belt type non-stage transmission 110 according to the present teaching. The transmission casings 100, 101 defining the belt chamber 103, i.e. a space for holding the V-belt type non-stage transmission 110 therein are fixed to a left side surface of the crankcase 106.

As shown in Figs. 2 and 4, a right side portion 100a of the transmission casing 100 defining the crank chamber 102 and an outer circumferential surface of an upper portion of the crankcase 106 are provided with the pivotal support 452 through which a pivot 450 is passed in the widthwise direction of the vehicle body.

The body frame 460 of the motorcycle 401 is provided with a suspension support 462 through which a pivot 470 is passed in the widthwise direction of the body frame 460.

These pivots 450, 470 are joined to each other via a link 480. Therefore, the power unit 410 in this embodiment is joined to the body frame 460 via the link 480, and supported on the body frame 460 so that the power unit can be turned around the pivot 450 as the center of rotation.

The V-belt type non-stage transmission 110 includes the primary shaft 1 formed in one body with the crankshaft 107 constituting an output shaft of the engine 105 constituting a power source, the secondary shaft 2 arranged in parallel with the primary shaft 1 and adapted to take out a driving force to be transmitted to the driving wheel 305, the primary sheave 3 and secondary sheave 4 mounted on the primary shaft 1 and secondary shaft 2, including fixed sheaves 3A, 4A and movable sheaves 3B, 4B which have belt-winding V-grooves, and adapted to vary the width of the V-grooves by advancing the movable sheaves 3B, 4B in the axial direction (lateral direction in Fig. 6, the V-belt 5 passed around the V-grooves in the primary sheave 3 and secondary sheave 4 and adapted to transmit a rotary driving force between the two sheaves 3, 4, and a groove width regulating mechanism 7 adapted to advance the movable sheave 3B by the electric motor 10 and thereby regulate the width of the grooves of the primary sheave 3 and secondary sheave 4. The diameter of the winding of the V-belt 5 around each of the sheaves 3, 4 is regulated by varying the groove width of the primary sheave 3 and secondary sheave 4 by this groove width regulating mechanism 7. This enables the change gear ratio to be regulated in a non-stepped manner between the primary sheave 3 and secondary sheave 4.

In this embodiment, the electric motor 10 of the groove width regulating mechanism 7 is provided at the rear side of the pivotal support 452 forming the joint portion connected to the body frame 460 in the upper circumference of the crankcase 106, and the starter motor 601 for starting the engine 105 at the front side of the pivotal support 452 as shown in Fig. 4. These electric motor 10 and starter motor 601 are provided substantially horizontally in the vicinity of the portions on the front and rear sides of the pivotal support 452 with the axes of the motors 10, 601 extended in the direction of the width of the vehicle body.

The starter motor 601 is adapted to transmit the rotation thereof to a starter driven gear 109 mounted fixedly on the crankshaft 107 via the gear train (not shown).

The electric motor 10 used for the groove width regulating mechanism 7 is necessary to be rotated forward and backward for increasing and decreasing the groove width, and the starter motor 601 is used for being rotated forward only. When a single motor capable of being rotated forward and backward is used for both the groove width regulating mechanism and starter, the starter motor is used for a backward rotation. In order to secure the operating reliability of the starter motor, special motors are preferably used for the respective purposes.

The electric motor 10 and starter motor 601 are fixed to the left side portion 100b of the transmission casing 100 and the outer circumferential surface of the upper portion of the crankcase 106 respectively so that the upper ends of these motors becomes substantially flush with each other. Above the electric motor 10 and starter motor 601, a suction duct 651 to which the air cleaner is joined is inserted.

In this embodiment, the balancer shaft 611 is provided in the vicinity of the pivotal support 452 in the crankcase as shown in Fig. 4.

In this balancer shaft 611, a gear 612 mounted on the balancer shaft is meshed with a gear 108 mounted on the crankshaft 107. The balancer shaft 611 is rotated backward in accordance with the rotation of the crankshaft 107 to impart a predetermined rotary load (counter load) to the crankshaft 107, offset the vibration of the crankshaft 107 and stabilize the rotation of the engine, the balancer shaft having considerably large weight.

A main wire harness 501 for feeding a current to the various kinds of electric parts is provided so that the wire harness 501 is vertically attached to the portion of an upper frame 461 which is on the side of the left surface of the body frame 460 as shown in Fig. 3 and Fig. 8.

A feed cable 511 for supplying a current to the electric motor 10 branches in a position in the vicinity of the provision of the pivotal support 452, through which the pivot 450 is passed, from the main wire harness 501 as shown by a thick broken line in Fig. 8, and forms a curved portion 511a constituting an excess length portion around a link reinforcing frame 483 extending in the widthwise direction of the vehicle body for the reinforcement of a link 480. The feed cable is then connected to the electric motor 10 provided immediately behind the pivotal support 452.

A feed cable 603 for supplying a current to the starter motor 601 branches in the vicinity of a position in which the pivotal support 452, through which the pivot 450 is passed, is provided from the main wire harness 501 as shown in Fig. 8, and then forms curved portion 603a constituting an excess length portion around the link reinforcing frame 483 extending in the widthwise direction of the vehicle body for the reinforcement of the link 480. The feed cable 603 is then connected to the starter motor 601 provided at the immediately front side of the pivotal support 452.

The construction and actions of the V-belt type non-stage transmission 110, automatic centrifugal clutch 70 and speed reducer 302 which constitute constituent elements of the power unit 410 will now be described on the basis of Fig. 6 and Fig. 7.

The non-stage transmission 110 in this embodiment includes the electric motor 10 (refer to Fig. 7 and Fig. 8) as the groove width regulating mechanism 7 constituting a means for giving an arbitrary moving thrust to a movable sheave 3B of the primary sheave 3, a primary side operating mechanism (so-called torque cam) 30 provided between the movable sheave 3B and primary shaft 1 and adapted to give a moving thrust advancing in the direction in which a torque difference is eliminated when the torque difference occurs between the rotary torque of the primary shaft 1 and that of the movable sheave 3B, a compression coiled spring 40 constituting a means for applying a thrust advancing in the groove width reducing direction to the movable sheave 4B of the secondary sheave 4, and a secondary side operating mechanism (so-called torque cam) 60 provided between the movable sheave 4B and secondary shaft 2 and adapted to give a moving thrust advancing in the direction of eliminating a torque difference when the torque difference occurs between the rotary torque of the secondary shaft 2 and that of the movable sheave 4B.

Referring to Fig. 6, arrows C, E show the directions of rotation of the primary shaft 1 and secondary shaft 2. An arrow D shows the direction of the thrust generated in the movable sheave 3B by the primary side operating mechanism 30, and an arrow F the direction of the thrust generated in the movable sheave 4B by the secondary side operating mechanism 60.

The non-stage transmission 110 in this embodiment is housed in the belt chamber 103 defined by a left portion 100b of the transmission casing 100 adjacent to the crankcase 106 of the engine 105 and the transmission casing 101, and the primary shaft 1 is formed in one body with the crankshaft 107.

The secondary shaft 2 is joined to the axle 300 via the speed reducer 302, and the driving wheel 305 is mounted on the axle 300. The primary sheave 3 is mounted on an outer circumference of the primary shaft 1, and the secondary sheave 4 on an outer circumference of the secondary shaft 2 via a centrifugal clutch 70.

As shown in Fig. 7, the primary sheave 3 includes a fixed sheave 3A mounted fixedly on one end of the primary shaft 1, and a sheave 3B movable in the axial direction (in the direction of an arrow A in the drawing) of the primary shaft 1. A V-groove around which a V-belt 5 is passed is formed between opposed conical surfaces of the fixed sheave 3A and movable sheave 3B.

One end of the primary shaft 1 is supported on the transmission casing 101 via a bearing 25. A sleeve 24 around which the bearing 25 is fitted and a sleeve 21 which will be described later are fixed by a lock nut 26 so that a boss portion of the fixed sheave 3A is not moved in the axial direction.

The movable sheave 3B has a cylindrical boss portion though which the primary shaft 1 is passed, and a cylindrical slider 22 is mounted fixedly on one end of this boss portion. The sleeve 21 is provided between the slider 22 and primary shaft 1. The sleeve 21 is fitted around the outer circumference of the primary shaft 1 via a spline 20 so that the sleeve 21 and primary shaft 1 are rotated in one body. The slider 22 is fitted around the outer circumference of the sleeve 21 so that the slider 22 can be moved in the axial direction.

The slider 22 is provided with a cam groove 31 extending diagonally with respect to the axial direction, and a guide pin 32 projecting from the outer circumference of the sleeve 21 is slidably inserted into the interior of this cam groove 31. The movable sheave 3B formed in one body with the slider 22 is thereby rendered movable in the axial direction of the primary shaft 1 as the sheave 3B is rotated in one body with the primary shaft 1.

These cam groove 31 and guide pin 32 form the above-mentioned primary side operating mechanism 30. Therefore, the direction in which the cam groove 31 is inclined is set to the direction in which, when a torque difference occurs between the rotary torque of the primary shaft 1 and that of the movable sheave 3B, a moving thrust in the torque difference eliminating direction is given to the movable sheave 3B of the primary sheave 3 (for example, the direction in which a moving thrust in the direction (of an arrow D) in which the width of the groove of the primary sheave 3 decreases is applied to the movable sheave 3B of the primary sheave 3 when the rotary torque of the primary shaft 1 is larger than that of the movable sheave 3B). A path of the cam groove 31 including the angle of inclination thereof can be set arbitrarily, i.e., linearly or curvilinearly and the like in accordance with the performance to be given, and the forming of such a path can also be done easily.

The inner surface of the left portion 100b of the transmission casing 100 which is opposed to the movable sheave 3B is provided with a cylindrical feed guide 16 projecting toward the movable sheave 3B and fixed with a screw 16. The feed guide 16 is mounted coaxially on the primary shaft 1, and this feed guide 16 is provided with a female thread 17 in an inner circumferential surface thereof. The feed guide 16 is provided on an outer circumferential surface with a reciprocating gear 12 fitted therearound so that the gear 12 can be slid in the axial and circumferential directions.

The reciprocating gear 12 is joined to one end of an outer circumferential wall of an annular rotary ring 13 bent in the shape of the letter "U" in section from an inner circumferential wall toward the outer circumferential wall thereof, and a male thread 18 formed on the outer circumferential surface of the inner circumferential wall is meshed with the female thread 17 of the feed guide 16. The inner circumferential wall of the rotary ring 13 is joined to the slider 22 formed in one body with the movable sheave 3B via the bearing 23.

Owing to the structure, when the reciprocating gear 12 is rotated, the reciprocating gear 12 and rotary ring 13 are moved in the axial direction due to the leading effect of the female thread 17 and male thread 18. As a result, the movable sheave 3B formed in one body with the slider 22 is moved, and the groove width of the primary sheave 3 varies. The male thread 18 and female thread 17 are made of trapezoidal threads.

The electric motor 10 for arbitrarily advancing the movable sheave 3B of the primary sheave 3 is provided as mentioned above in the vicinity of a position behind the pivotal support 452 on the outer circumferential surface of the upper portion of the crankcase 106. The output shaft 10a of the motor and reciprocating gear 12 are joined to each other via the gear transmission mechanism 11 made of a combination of a multi-stage spur gears 11 A to 11E.

The electric motor 10 is formed so that the movable sheave 3B can be advanced in the axial direction via the reciprocating gear 12 with the rotation of the electric motor 10 controlled by a control unit 200 (refer to Fig. 7).

The secondary sheave 4 includes as shown in Fig. 6 the fixed sheave 4A joined to the secondary shaft 2 via a centrifugal clutch 70, and the movable sheave 4B capable of being moved in the axial direction (direction of an arrow B in the drawing) of the secondary shaf6 2. The V-groove around which the V-belt 5 is passed is formed between opposed conical surfaces of these fixed sheave 4A and movable sheave 4B.

The fixed sheave 4A is provided with a cylindrical guide 51, which is supported rotatably on an outer circumference of the secondary shaft 2 via a bearing. The centrifugal clutch 70 interposed between the fixed sheave 4A and secondary shaft 2 is provided with a centrifugal plate 71 rotated in a body with the guide 51 of the fixed sheave 4A, centrifugal weight 72 supported on this centrifugal plate 71, and a clutch housing 73 with and from which the centrifugal weight 72 is engaged and disengaged.

The centrifugal plate 71 is joined to the guide 51 of the fixed sheave 4a by spline fitting so that the centrifugal plate 71 can be rotated with the guide 51 in one body. The clutch housing 73 is fixed to one end of the secondary shaft 2 via a boss member 47 spline fitted therearound. The mentioned end of the secondary shaft 2 is supported on the transmission casing 101 via the bearing 50. The clutch housing 73 and boss portion 47 are fixed so that they are not axially moved, by fixing by the lock screw 49 the sleeve 48 around which the bearing 50 is fitted.

Owing to such a structure, when the rotational frequency of the centrifugal plate 71 rotated with the fixed sheave 4A in one body reaches a predetermined level, the centrifugal weight 72 is moved outward by the centrifugal force to contact the clutch housing 73, so that the rotation of the fixed sheave 4A is transmitted to the secondary shaft 2.

The movable sheave 4B is formed so that the movable sheave 4B is integral with the cylindrical slider 52 supported axially movably on the outer circumference of the guide 51 of the fixed sheave 4A. The movable sheave 4B is urged in the direction in which the width of the V-groove is reduced by the compression coiled spring 40. The compression coiled spring 40 is engaged at one end with a projection on the outer circumference of the slider 52, and at the other end with a spring seat of the centrifugal plate 71, and put in a compressed state.

The slider 52 formed with the movable sheave 4B in one body is provided with a cam groove 61 inclined with respect to the axis thereof, and the guide pin 62 projecting from the outer circumference of the guide formed with the fixed sheave 4A in one body is inserted slidably into this cam groove 61. Owing to this structure, the movable sheave 4B made integral with the slider 52 is set movable in the axial direction of the secondary shaft 2 as the movable sheet is rotated with the secondary shaft 2 in one body.

The cam groove 61 and guide pin 62 constitute the secondary side operating mechanism 60. Therefore, the direction in which the cam groove 61 inclines is set to the direction in which a moving thrust in the torque eliminating direction is given to the movable sheave 4B when a difference occurs between the rotary torque of the secondary shaft 2 and that of the movable sheave 4B (the direction in which the moving thrust in the direction (of an arrow F) in which the groove width of the secondary sheave 4 decreases is given to the movable sheave 4B, for example, when the rotary torque of the secondary shaft 2 is smaller than that of the movable sheave 4B). A path of the cam groove 61 including the angle of inclination thereof can be set arbitrarily to a linear shape and a curvilinear shape and the like in accordance with a performance to be given, and the forming of the path can also be done easily.

When such a secondary side operating mechanism 60 is provided, the rotational speed of the fixed sheave 4A joined to the secondary shaft 2 becomes low just as in a case where, for example, a motorcycle in motion comes to an ascending slope. When a speed difference occurs between the fixed sheave 4A and movable sheave 4B keeping rotation by the V-belt 5, the guide pin 62 apparently pushes the cam groove 61 in the direction of an arrow F. As a result, the movable sheave 4B is pushed out via the slider 52 in the direction in which the movable sheave 4B approaches the fixed sheave 4A, and the width of the V-groove is forcibly reduced.

The actions of the V-belt type non-stage transmission 110 of the motorcycle in this embodiment will now be described.

When a change gear signal is inputted from the control unit 200 into the electric motor 10, the reciprocating gear 12 and rotary ring 13 are rotated by the rotation of the electric motor 10, and the slider 22 fixed to the rotary ring 13 via the bearing 23 is moved axially owing to the leading effect of the male thread 18 and female thread 17. The movable sheave 3b made integral with the slider 22 is then moved, and the width of the groove of the primary sheave 3 varies.

For example, when the groove width of the primary sheave 3 decreases, the winding diameter of the belt 5 increases, and the change gear ratio changes toward a Top-side. When the groove width of the primary sheave 3 increases, the winding diameter of the belt 5 decreases, and the change gear ratio changes toward a Low-side.

On the other hand, the groove width of the secondary sheave 4 varies in accordance with the variation of the groove width of the primary sheave 3, in the direction opposite to the direction in which the groove width of the primary sheave 3 varies.

When the winding diameter of the V-belt on the primary sheave 3 becomes smaller (changes toward the Low-side), an eating force of the V-belt 5 becomes smaller on the side of the secondary sheave 4. Therefore, a slip occurs between the movable sheave 4B and V-belt, and a speed difference between the movable sheave 4B and fixed sheave 4A. As a result, the movable sheave 4B is pressed against the fixed sheave 4A due to an operation of the cam groove 61 and the urging force of the compression coiled spring 40. This causes the groove width of the secondary sheave 4 to decrease, and the winding diameter of the V-belt to increase.

Consequently, the change gear ratio between the primary sheave 3 and secondary sheave 4 becomes large, and the torque transmitted to the driving wheel 305 increases. On the contrary, when the winding diameter of the V-belt 5 with respect to the primary sheave 3 increases (changes toward the Top-side), the V-belt 5 eats into the V-groove on the side to the secondary sheave 4, the movable sheave 4B is moved in the direction in which the movable sheave 4B advances away from the fixed sheave 4A against the urging force of the compression coiled spring 40. This causes the groove width of the secondary sheave 4 to increase, and the winding diameter of the V-belt to become large, so that the change gear ratio of the primary sheave 3 to that of the secondary sheave 4 becomes small.

When the rotational frequency of the secondary sheave 4 becomes not lower than a predetermined level, the secondary sheave 4 is joined to the secondary shaft 2 via the centrifugal clutch 70, and the rotation of the secondary shaft 2 is transmitted to the axle 300 via the gear train of the speed reducer 302.

The power unit 410 of a small-sized vehicle described above is formed such that the regulation of the groove width of each sheave 3, 4 of the V-belt type non-stage transmission 110 combined with the engine 105 is made by the electric motor 10. Therefore, when the action of the electric motor 10 is controlled in accordance with the operating condition and traveling condition of the vehicle, the controlling of the change gear ratio corresponding to the operating condition and traveling condition of the vehicle can be done.

The electric motor 10 of the groove width regulating mechanism 7 is provided on the outer circumferential surface of the upper portion of the crankcase 106 of the engine 105, and the direct radiation of the heat generated in the power unit 410 dose not occur. Therefore, a temperature rise due to the influence of the generation of heat in the power unit 410 rarely occurs.

Moreover, the position in which the electric motor 10 is provided is behind the pivotal support 452 on the outer circumferential surface of the upper portion of the crankcase 106 as shown in Fig. 2, and the rotation of the driving wheel 305 provided behind the pivot 452 involves the wind of the surroundings of the driving wheel 305 to cause the air blasting operation to the surroundings of the electric motor 10 to occur. Therefore, the obtainment of a cooling effect due to the air blast can be expected, and the heat resisting performance required of the electric motor 10 of the groove width regulating mechanism 7 is held down to enable the manufacturing cost to be reduced.

The position in which the electric motor 10 of the groove width regulating mechanism 7 is provided is on the outer circumferential surface of the upper portion of the crankcase 106. Therefore, the power unit 410 can be put in an exposed state simply by only opening the vehicle body cover and sheet and the like enclosing, for example, the upper portion of the power unit as compared with a related art power unit provided with an electric motor in the interior of the casing of the power unit. Therefore, the inspection of and maintenance work for the electric motor 10 can be easily carried out, and an excellent maintenance efficiency can be obtained.

The position in which the electric motor 10 of the groove width regulating mechanism 7 is provided is on the outer circumferential surface of the upper portion of the crankcase 106. Therefore, as compared with a related art power unit in which the electric motor is provided in the casing, consideration does not need to be given to the method of preventing the electric wires from interfering with the movable parts, such as the power transmission gear train during the wiring operation for the electric motor 10. This enables the designing of the wiring for the electric motor 10 to be done easily.

The electric motor 10 of the groove width regulating mechanism 7 of large weight and the starter motor 601 for the engine 105 are arranged substantially horizontally in the vicinity of positions in front and rear sides of the pivotal support 452 constituting a pivotal fulcrum, so that the weight can be balanced by concentrating parts of large weight in the vicinity of positions of the pivotal fulcrum. Therefore, the electric motor 10 of the V-belt type non-stage transmission 110 does not constitute a factor of causing an imbalance of the weight of the vehicle but can improve the weight balance of the vehicle and operating stability.

Each of the electric motor 10 of the groove width regulating mechanism 7 and the starter motor 601 for the engine 105 is arranged in the vicinity of the pivotal support 452 constituting a pivotal fulcrum. Therefore, the relative quantity of movement from the pivotal support of each motor 10, 601 and amplitude thereof can be held down to a low level with respect to the pivotal movement, which is made during the traveling of the vehicle, of the power unit 410 around the pivot.

This enables the inertial force of each motor during the pivotal movement of the power unit 410 to be held down to a low level, and a stress load working on the surroundings of the pivotal fulcrum can be correspondingly lessened. The mechanical strength to be secured by the joint portion of the power unit 410 and body frame 460 and the casing (mainly, crankcase 106) of the power unit 410 can be held down correspondingly to the reduced stress load working during the pivotal movement of the power unit 410, and this enables the weight of the power unit 410 and vehicle 401 to be reduced.

Since the electric motor 106 of the groove width regulating mechanism 7 and starter motor 601 are provided in the vicinity of the pivotal support 452 constituting the pivotal fulcrum, the excess length of the electric wires arranged for the motors 10, 601 can be minimized, and the electric wires arranged for the motors 10, 601 can be put in order.

This enables the wire harness 501 to be miniaturized and simplified, and the vibration resistance of the motors 10 to be improved.

In this embodiment, the balancer shaft 611 which is a large weight part placed in the crankcase 106 is provided in the vicinity of the pivotal support 452. Therefore, the parts of large weight provided around the pivotal fulcrum increases, and are concentrated around the pivotal fulcrum. Therefore, the regulating of the weight balance of the vehicle becomes easier, and the reduction of the inertial force of the large weight parts during the vibration of the power unit 410 is promoted. This enables the reduction of the weight of the vehicle to be further forwarded.

When it becomes necessary that the distance between the primary shaft 1 and secondary shaft 2 be reduced for the purpose of making compact the V-belt type non-stage transmission 110 in the mode in which the electric motor 10 of the groove width regulating mechanism 7 is provided on the outer circumferential surface of the upper portion of the crankcase 106, the electric motor 10 does not obstruct the reduction of the distance between the axis of the primary shaft 1 and that of the secondary 2, and is suitable for making compact the V-belt type non-stage transmission 110.

In the structure like this mode of embodiment in which the electric motor 10 and starter motor 601 are provided in the vicinity of the positions on the front and rear sides of the pivotal support 452 with a suction duct 651 inserted above the same, the upper end of the electric motor 10 and that of the starter motor 601 are flush with each other. Therefore, the mode can be set to a mode in which the suction duct 651 passes in the shape of a substantially straight line, and a high performance suction system of a low conduit resistance becomes easy to be formed.

In the above-described first embodiment, the electric motor 10 for the groove width regulating mechanism 7 is provided in the vicinity of the position behind the pivotal support 452, and the starter motor 601 in the vicinity of the position in front of the pivotal support 452. However, concerning the weight balance of the vehicle, the electric motor 10 may be provided in the vicinity of the position in front of the pivotal support 452 with the starter motor 601 provided in the vicinity of the position behind the pivotal support 452. Even when such an arrangement is employed, the same effect can be obtained.

Moreover, when the electric motor 10 is arranged substantially horizontally with respect to the pivotal support 452 on the outer surface of the crankcase 106, the motor 10 may be provided in front of the pivotal support 452.

Although the power unit 410 in the motorcycle in the above-described embodiment is supported pivotably on the body frame 460 owing to the pivotal support 452 provided on the right portion 100a of the transmission casing 100 and the pivotal support 452 provided on the outer circumferential surface of the upper surface of the crankcase 106, the present teaching is not limited to this structure.

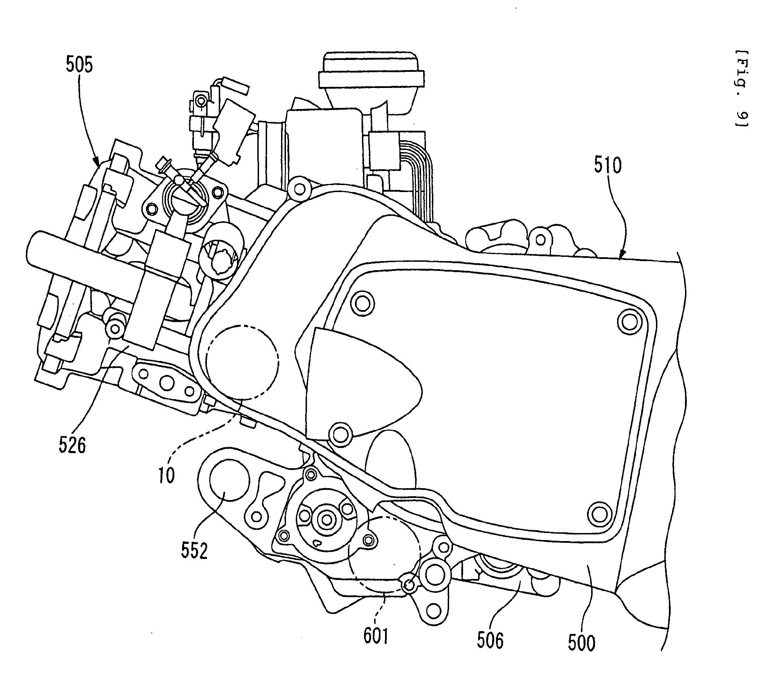

As shown in, for example, Fig. 9, the power unit 510 in the second embodiment is supported pivotably on the body frame (not shown) owing to the transmission casing 500 and the pivotal support 552 provided on the outer circumferential surface of the lower portion of the crankcase 506.

The electric motor 10 of the groove width regulating mechanism is provided on the front side of the pivotal support 552, and the starter motor 601 for starting the engine 505 behind the pivotal support 552. The electric motor 10 and starter motor 601 are provided in the vicinity of positions in front of and behind the pivotal support 552 with the axes of the motors extended in the widthwise direction of the body frame.

The electric motor 10 and starter motor 601 are fixed to the transmission casing 500 and the outer surface of the lower portion of the crankcase 506 respectively.

In the above-described embodiment, the power units 410, 510 for motorcycles are described. The present power units 410, 510 can be applied not only to a motorcycle but also to a three-wheeled bogie or a four-wheeled bogie and the like, of course, which are comparatively small-sized vehicles.

The description above discloses (amongst others) an embodiment of a power unit having: an engine, a transmission casing extending rearward from a crank case of the engine, and a V-belt type non-stage transmission housed in the transmission casing and adapted to transmit a driving force of the engine to a driving wheel, wherein: a pivotal support provided on an outer surface of the crank case is pivotably joined to a body frame, wherein the V-belt type non-stage transmission includes: a primary sheave which is mounted on a primary shaft into which the driving force of the engine is inputted, and which is provided with a belt winding V-groove, a secondary sheave which is mounted on a secondary shaft from which the driving force to be transmitted to the driving wheel is taken out, and which is provided with a belt winding V-groove, a V-belt passed around the V-grooves of these primary sheave and secondary sheave and adapted to transmit the rotational driving force between the two sheaves, and a mechanism for regulating the width of the grooves of the primary sheave and secondary sheave by giving an arbitrary moving thrust to a movable sheave of the primary sheave by an electric motor, the electric motor of the groove width regulating mechanism and a starter motor used to start the engine being provided in the vicinity of positions on the front and rear sides of the pivotal support on the outer surface of the crankcase.

The description above further discloses an embodiment of a power unit having: an engine, a transmission casing extending rearward from a crank case of the engine, and a V-belt type non-stage transmission housed in the transmission casing and adapted to transmit a driving force of the engine to a driving wheel, wherein a pivotal support provided on an outer surface of the crank case is pivotably joined to a body frame, characterized in that the V-belt type non-stage transmission includes a primary sheave which is mounted on a primary shaft into which the driving force of the engine is inputted, and which is provided with a belt winding V-groove, a secondary sheave which is mounted on a secondary shaft from which the driving force to be transmitted to the driving wheel is taken out, and which is provided with a belt winding V-groove, a V-belt passed around the V-grooves of these primary sheave and secondary sheave and adapted to transmit the rotational driving force between the two sheaves, and a mechanism for regulating the width of the grooves of the primary sheave and secondary sheave by giving an arbitrary moving thrust to a movable sheave of the primary sheave by an electric motor, the electric motor of the groove width regulating mechanism being provided side by side substantially horizontally with respect to the pivotal support on the outer surface of the crank case.

The features of the embodiments of the power units preferably reside in that the balancer shaft for offsetting the vibration of the engine is provided in the portion of the interior of the crankcase which is in the vicinity of the pivotal support.

The features of the embodiments of the power units also preferably reside in that the electric motor of the groove width regulating mechanism is provided at the rear side of the pivotal support.

According to each of the embodiments of the power units of the above-described construction, the groove width regulating mechanism is provided which is adapted to control the change gear ratio to be at a desired level by regulating the width of the groove of the primary sheave by the electric motor. When the movement of the electric motor is controlled in accordance with the operating condition and traveling condition of the vehicle, the controlling of the change gear ratio of the V-belt non-stage transmission can be done in accordance with the operating condition and traveling condition of the vehicle.

Moreover, the electric motor of the groove width regulating mechanism is provided on the outer surface of the crankcase of the engine, and the heat generated in the power unit does not directly radiate, so that a temperature rise due to the influence of the generation of heat in the power unit rarely occurs.

The electric motor of the groove width regulating mechanism is provided on the outer surface of the crankcase. Therefore, as compared with a related art power unit provided with an electric motor in the interior of the casing for the power unit, the power unit according to the present teaching can be put in an exposed state simply by merely opening, for example, a body cover and sheet enclosing an upper portion of the power unit. This enables the inspection and maintenance of the electric motor to be carried out easily, and an excellent ability to maintain the electric motor to be obtained.

The electric motor of the groove width regulating mechanism is provided on the outer surface of the crankcase. Therefore, as compared with a related art power unit in which the electric motor of the groove width regulating mechanism is provided in the interior of the casing, it becomes unnecessary in the present embodiments that consideration etc. be given to a method of preventing the electric wires from interfering with the movable parts, such as a power transmission gear train when the electric wires are arranged around the electric motor. This makes it easy to design the wiring for the electric motor.

When the electric motor, which increases the weight, of the groove width regulating mechanism and starter motor are provided side by side in the vicinity of positions on the front and rear sides of the pivotal support constituting a fulcrum of a pivotal movement, or, when the electric motor is provided side by side substantially horizontally with respect to the pivotal support, the weight of the vehicle can be balanced by providing large weight objects in a concentrated manner on the portion thereof which is in the vicinity of the pivotal fulcrum. Therefore, the electric motor of the V-belt type non-stage transmission does not constitute the cause to invite the imbalance of the weight of the vehicle. This enables the weight balance of the vehicle and operating stability thereof to be improved.

Since the electric motor of the groove width regulating mechanism and starter motor are provided in the vicinity of the pivotal support constituting the pivotal fulcrum, and, since the electric motor is provided side by side substantially horizontally with respect to the pivotal support, the relative quantity of movement and width of vibration measuring from the pivotal fulcrum of each motor can be held down to low levels with respect to a turning action around the pivotal fulcrum of the power unit during the travel of the vehicle.

This enables the inertial force of each motor during the vibration of the power unit to be held down to a low level, and a stress load working on the surroundings of the pivotal fulcrum to be lessened correspondingly. Correspondingly to the decreased stress load working on the mentioned portions during the vibration of the power unit, it also becomes possible to reduce the weight of the power unit and vehicle while holding down the mechanical strength to be secured by a joint portion between the power unit and the body frame and the casing for the power unit.

Since the electric motor of the groove width regulating mechanism and starter motor are provided in the vicinity of the pivotal support constituting the pivotal fulcrum, the arrangement of electric wires for each motor can be made in good order while minimizing the excess length of the electric wires for the motor. This enables a wire harness to be miniaturized and simplified, and the vibration resistance of each motor to be improved.

The balancer shaft, a large weight part in the interior of the crankcase is also provided in the position in the vicinity of the pivotal support. Therefore, the number of large weight parts provided around the pivotal fulcrum increases, and large weight parts are concentrated on the portions around the pivotal fulcrum. This enables the regulation of the balance of the weight of the vehicle to be made easier, and the reduction of the inertial force of the large weight parts during the vibration of the power unit to be promoted. Accordingly, the reduction of the weight, etc. of the vehicle can further be forwarded.

When the electric motor is provided behind the pivotal support, the rotation of the driving wheel provided on the rear side of the electric motor involves the wind therearound to cause an air blasting effect to the surroundings of the electric motor to occur. Therefore, the occurrence of a cooling effect owing to the air blasting can also be expected, and the heat resisting performance required for the electric motor of the groove width regulating mechanism is further held down. This enables the manufacturing cost to decrease.

Thus, according to a preferred embodiment, in order to provide a power unit for a small-sized vehicle, capable of not only controlling the change gear ratio in accordance with the operating condition and traveling condition of the vehicle but also holding down the heat resisting performance, which the electric motor of the groove-width regulating mechanism demands to have, and thereby reducing the manufacturing cost, the power unit being further capable of minimizing the weight of the power unit and vehicle, there is provided a power unit 410 for a small-sized vehicle, formed by a structure in which a V-belt type non-stage transmission 110 is combined with an engine 105, and using an electric motor 10 for a groove width regulating mechanism 7 adapted to regulate the groove widths of a primary sheave 3 and secondary sheave 4 of the V-belt type non-stage transmission 110. The electric motor 10 and starter motor 601 for starting the engine are provided in the vicinity of positions on the front and rear sides of a pivotal support 452 joined pivotably to a body frame 460 on an outer circumferential surface of an upper portion of a crankcase 106 of the engine 105.

## Claims

1. Power unit for, in particular small-sized, vehicles comprising an engine (105) having a crank case (106),
and a V-belt-type non-stage transmission (110) having a groove-width regulating mechanism (7) with an electric motor (10) for controlling a change gear ratio by changing a groove width, **characterized in that**
a pivotal support (452) is provided on an outer surface of the crank case (105) being pivotally joined to a body frame (460) of the vehicle, and the electric motor (10) of the groove-width regulating mechanism (7) is provided on an outer surface of a crank case (106) of the engine (105), and said electric motor (10) of the groove width regulating mechanism (7) is provided in parallel and substantially horizontal with the pivotal support (452) on the outer surface of the crank case (106).

2. Power unit according to claim 1, wherein the electric motor (10) of the groove width regulating mechanism (7) is provided on an outer circumferential surface of the upper portion or the lower portion of the crank case (106) of the engine (105).

3. Power unit according to claim 1 or 2, wherein the electric motor is provided in a vicinity of the pivotal support (452).

4. Power unit according to one of the claims 1 to 3, further comprising a starter motor (601) for starting the engine (105), said starter motor (601) and said electric motor (10) being provided in a vicinity of the positions on the front and rear sides of the pivotal support (452).

5. Power unit according to one of the claims 1 to 4, wherein the V-belt type non-stage transmission (110) is housed in the transmission casing (100,101) and adapted to transmit a driving force of the engine (105) to a driving wheel (305), said V-belt type non-stage transmission (110) includes:
- a primary sheave (3) which is mounted on a primary shaft (1) into which the driving force of the engine (105) is inputted, and which is provided with a belt winding V-groove,
- a secondary sheave (4) which is mounted on a secondary shaft (2) from which the driving force to be transmitted to the driving wheel (305) is taken out, and which is provided with a belt winding V-groove,
- a V-belt (5) passed around the V-grooves of these primary sheave (3) and secondary sheave (4) and adapted to transmit the rotational driving force between the two sheaves (3,4),
wherein the mechanism for regulating the width of the grooves (A) of the primary sheave (3) and secondary sheave (4) applies an arbitrary moving thrust to a movable sheave (3A) of the primary sheave (3) by the electric motor (10).

6. Power unit according to one of the claims 1 to 5, further comprising a balancer shaft (611) for offsetting the vibration of the engine (105) being provided in the vicinity of the portion of the pivotal support (452) which is on an inner side of the crank case (106).

7. Power unit according to one of the claims 1 to 6, wherein the electric motor (10) of the groove width regulating mechanism (7) is provided on the portion of an outer surface of an upper portion of the crank case (106) which is behind the pivotal support (452).

8. Vehicle, in particular motorcycle having a power unit according to one of the claims 1 to 7.

## Patentansprüche

1. Antriebseinheit für insbesondere kleine Fahrzeuge, die einen Motor (105) mit einem Kurbelgehäuse (106) aufweisen,
und ein stufenloses Getriebe (110) vom Keilriemen- Typ mit einer Nutbreiten- Regelvorrichtung (7) mit einem Elektromotor (10) zum Steuern eines Übersetzungsverhältnisses durch Verändern einer Nutbreite, **dadurch gekennzeichnet, dass** ein Schwenklager (452) an einer Außenoberfläche des Kurbelgehäuses (105) vorgesehen ist, das mit einem Karosserierahmen (460) des Fahrzeuges schwenkbar verbunden ist, und der Elektromotor (10) der Nutbreiten- Regelvorrichtung (7) an einer Außenoberfläche eines Kurbelgehäuses (106) des Motors (105) vorgesehen ist, und der Elektromotor (10) der Nutbreiten- Regelvorrichtung (7) parallel und im Wesentlichen horizontal mit dem Schwenklager (452) an der Außenoberfläche des Kurbelgehäuses (106) vorgesehen ist.

2. Antriebseinheit nach Anspruch 1, wobei der Elektromotor (10) der Nutbreiten-Regelvorrichtung (7) auf einer äußeren Umfangsoberfläche des oberen Abschnittes oder des unteren Abschnittes des Kurbelgehäuses (106) des Motors (105) vorgesehen ist.

3. Antriebseinheit nach Anspruch 1 oder 2, wobei der Elektromotor in einer Nähe des Schwenklagers (452) vorgesehen ist.

4. Antriebseinheit nach einem der Ansprüche 1 bis 3, außerdem aufweisend einen Startermotor (601) zum Starten des Motors (105), wobei der Startermotor (601) und der Elektromotor (10) in einer Nähe der Positionen an den vorderen und hinteren Seiten des Schwenklagers (452) vorgesehen sind.

5. Antriebseinheit nach einem der Ansprüche 1 bis 4, wobei das stufenlose Getriebe (110) vom Keilriemen- Typ in dem Getriebegehäuse (100, 101) untergebracht und vorgesehen ist, eine Antriebskraft des Motors (105) auf ein Antriebsrad (305) zu übertragen, wobei das stufenlose Getriebe (110) vom Keilriemen- Typ aufweist:
- eine Primärscheibe (3), die auf der Primärwelle (1) montiert ist, in die die Antriebskraft des Motors (105) eingegeben wird, und die mit einer Keilriemenumschlingungsnut versehen ist.
- eine Sekundärscheibe (4), die auf einer Sekundärwelle (2) montiert ist, von der die Antriebskraft, um auf das Antriebsrad (305) übertragen zu werden, abgenommen ist, und die mit einer Keilriemenumschlingungsnut versehen ist.
- einen Keilriemen, der um die Keilnuten dieser Primärscheibe (3) und Sekundärscheibe (4) herumgeht und vorgesehen ist, die Drehantriebskraft zwischen den zwei Scheiben (3, 4) zu übertragen,
wobei die Vorrichtung zum Regeln der Breite der Nuten (A) der Primärscheibe (3) und der Sekundärscheibe (4) einen willkürlichen Bewegungsdruck auf eine bewegbare Scheibe (3A) der Primärscheibe (3) durch den Elektromotor (10) ausübt.

6. Antriebseinheit nach einem der Ansprüche 1 bis 5, außerdem aufweisend eine Ausgleichswelle (611) zum Ausgleichen der Schwingung des Motors (105), die in der Nähe des Abschnittes des Schwenklagers (452) vorgesehen ist, das auf einer Innenseite des Kurbelgehäuses (106) vorgesehen ist.

7. Antriebseinheit nach einem der Ansprüche 1 bis 6, wobei der Elektromotor (10) der Nutbreiten- Regelvorrichtung (7) an dem Abschnitt einer Außenoberfläche eines oberen Abschnittes des Kurbelgehäuses (106) vorgesehen ist, der hinter dem Schwenklager (452) ist.

8. Fahrzeug, insbesondere ein Motorrad mit einer Antriebseinheit nach einem der Ansprüche 1 bis 7.

## Revendications

1. Groupe moteur, en particulier pour des véhicules de petite taille, comprenant un moteur (105) possédant un carter de moteur (106),
et une transmission continue à courroie trapézoïdale (110) possédant un mécanisme de régulation de largeur de rainure (7) avec un moteur électrique (10) pour contrôler un changement de vitesse en changeant une largeur de rainure, **caractérisé en ce que**
un support pivotant (452) est prévu sur une surface extérieure du carter de moteur (105) connecté de façon pivotante à un châssis (460) du véhicule, et le moteur électrique (10) du mécanisme de régulation de largeur de rainure (7) est prévu sur une surface extérieure d'un carter de moteur (106) du moteur (105), et ledit moteur électrique (10) du mécanisme de régulation de largeur de rainure (7) est prévu en parallèle et sensiblement horizontal avec le support pivotant (452) sur la surface extérieure du carter de moteur (106).

2. Groupe moteur selon la revendication 1, dans lequel le moteur électrique (10) du mécanisme de régulation de largeur de rainure (7) est prévu sur une surface circonférentielle extérieure de la partie supérieure ou la partie inférieure du carter de moteur (106) du moteur (105).

3. Groupe moteur selon la revendication 1 ou 2, dans lequel le moteur électrique est prévu dans le voisinage du support pivotant (452).

4. Groupe moteur selon l'une des revendications 1 à 3, comprenant en outre un moteur de démarrage (601) pour démarrer le moteur (105), ledit moteur de démarrage (601) et ledit moteur électrique (10) étant prévus dans le voisinage des positions sur les côtés avant et arrière du support pivotant (452).

5. Groupe moteur selon l'une des revendications 1 à 4, dans lequel la transmission continue à courroie trapézoïdale (110) est logée dans le carter de transmission (100, 101) et adaptée pour transmettre une force d'entraînement du moteur (105) à une roue d'entraînement (305), ladite transmission scontinue à courroie trapézoïdale (110) comprend :
- une poulie primaire (3) qui est montée sur un arbre primaire (1) dans lequel la force d'entraînement du moteur (105) est entrée, et qui est pourvue d'une rainure trapézoïdale d'enroulement de courroie,
- une poulie secondaire (4) qui est montée sur un arbre secondaire (2) à partir duquel la force d'entraînement destinée à être transmise à la roue d'entraînement (305) est extraite, et qui est pourvue d'une rainure trapézoïdale d'enroulement de courroie,
- une courroie trapézoïdale (5) passant autour des rainures trapézoïdales de ces poulie primaire (3) et poulie secondaire (4) et adaptée pour transmettre la force d'entraînement rotative entre les deux poulies (3, 4),
dans lequel le mécanisme pour réguler la largeur des rainures (A) des poulie primaire (3) et poulie secondaire (4) applique une poussée mobile arbitraire sur une demi-poulie coulissante (3A) de la poulie primaire (3) par l'intermédiaire du moteur électrique (10).

6. Groupe moteur selon l'une des revendications 1 à 5, comprenant en outre un arbre d'équilibrage (611) pour compenser la vibration du moteur (105), celui-ci étant prévu dans le voisinage de la partie du support pivotant (452) qui est sur un côté intérieur du carter de moteur (106).

7. Groupe moteur selon l'une des revendications 1 à 6, dans lequel le moteur électrique (10) du mécanisme de régulation de largeur de rainure (7) est prévu sur la partie d'une surface extérieure d'une partie supérieure du carter de moteur (106) qui se trouve derrière le support pivotant (452).

8. Véhicule, en particulier un motocycle, possédant un groupe moteur selon l'une des revendications 1 à 7.
